Europäisches Patentamt

European Patent Office

Office européen des brevets

(11) Veröffentlichungsnummer: **0 470 483 B1**

(12) **EUROPÄISCHE PATENTSCHRIFT**

(45) Veröffentlichungstag der Patentschrift: **13.09.95**

(51) Int. Cl.6: **G01F 23/26**

(21) Anmeldenummer: **91112778.5**

(22) Anmeldetag: **30.07.91**

(54) **Verfahren und Sondenanordnung für die DK-kompensierte kapazitive Füllstandsmessung.**

(30) Priorität: **10.08.90 DE 4025400**

(43) Veröffentlichungstag der Anmeldung:
**12.02.92 Patentblatt 92/07**

(45) Bekanntmachung des Hinweises auf die
Patenterteilung:
**13.09.95 Patentblatt 95/37**

(84) Benannte Vertragsstaaten:
**AT BE CH DE FR GB IT LI NL**

(56) Entgegenhaltungen:
EP-A- 0 029 485          DE-A- 2 819 731
DE-A- 3 824 231          DE-A- 3 843 339
DE-B- 2 146 161          GB-A- 2 090 415

(73) Patentinhaber: **VEGA Grieshaber KG**
**Hauptstr. 1 - 7**
**D-77709 Wolfach (DE)**

(72) Erfinder: **Raffalt, Felix**
**Karl-May-Weg 7**
**W-7612 Fischerbach (DE)**
Erfinder: **Kech, Günter**
**Talstrasse 37**
**W-7620 Wolfach-Kirnbach (DE)**

(74) Vertreter: **Westphal, Klaus, Dipl.-Ing. et al**
**Patentanwälte**
**Westphal, Buchner, Mussgnug**
**Neunert, Göhring**
**Waldstrasse 33**
**D-78048 Villingen-Schwenningen (DE)**

Rank Xerox (UK) Business Services
(3.10/3.09/3.3.3)

**Beschreibung**

Die Erfindung betrifft ein Verfahren und Sondenanordnung zur Füllgut-Dielektrikums-kompensierten kapazitiven Füllstandsmessung der im Oberbegriff des Anspruchs 1 genannten Art.

Kapazitive Füllstandsmeßeinrichtungen werden zur Messung von Behälterständen, z.B. von flüssigen oder festen Stoffen, in offenen oder geschlossenen Lagertanks, Silos oder Bunkern zum Zweck der Inhaltsbestimmung oder Füllhöhenmessung eingesetzt.

Die kapazitiven Meßwertaufnehmer bestehen z.B. aus zwei Elektrodenflächen, die im Behälter elektrisch isoliert befestigt sind und als Kondensatorflächen, z.B. eines Zylinderkondensators, zusammen mit dem zwischen den Kondensatorflächen eingebrachten Dielektrikum einen Kondensator mit definierter Kapazität bilden. Ein Maß für den Füllstand des Füllgutes im Behälter ist die sich in Abhängigkeit vom Füllstand ändernde Kapazität dieses Kondensators. Zur Kompensation des durch die Dielektrizitätskonstante (DK) des Füllgutes bedingten Meßfehlers wird, wie z.B. in der DE-OS 25 55 817 ausgeführt, mit dem von einer z.B. nahe dem Behälterboden angebrachten, zusätzlichen Kompensationselektrode gemessenen Stromwert, welcher füllstandsunabhängig ist und nur von dem DK-Wert des zu messenden Füllgutes abhängt, der Stromwert der Füllstandsmeßsonde korrigiert, so daß aus dem DK-kompensierten Füllstandswert die Höhe des Füllgutes im Behälter, unabhängig von dem DK-Wert des Füllgutes, ermittelt wird.

Nachteil dieser Methode ist, daß die Kompensationssonde den DK-Wert des Füllgutes nur am Behälterboden oder in Behälterbodennähe ermittelt. Dies hat zur Folge, daß sich bei Ausbildung eines Behältersumpfes, der einen vom übrigen Füllgut abweichenden DK-Wert besitzt, die DK-Kompensation mit einem falschen Korrekturwert erfolgt und damit zu falschen Füllstandshöhen führt. Dieser Nachteil tritt prinzipiell auch dann auf, wenn der DK-Wert des Füllgutes sich, bedingt durch einen Temperaturgradienten, innerhalb eines langgestreckten stehenden Behälters ändert.

Auch wird bei z.B. nicht miteinander homogen mischbaren Flüssigkeiten die Korrektur nur mit dem DK-Wert der die Kompensationssonde benetzenden Flüssigkeitskomponente vorgenommen.

Zur Vermeidung derartiger mit einem falschen DK-Wert vorgenommener Korrekturen wird in der DE 32 29 874 A1 vorgeschlagen, die Bezugselektroden mit der Flüssgkeit zu umspülen, deren DK-Wert zur Korrektur der Füllstandshöhenbestimmung zu messen ist. Hierzu ist eine im Inneren eines Treibstofftanks angeordnete Pumpe vorgesehen, die derartig eingerichtet ist, daß sie den Treibstoff durch ein Leitungssytem hindurch abgibt, welches eine Gruppe von Bezugselektroden aufweist. Die Benetzung der Bezugselektroden mit z.B. Wasser wird damit unterbunden.

Ein anderes Verfahren zur Kompensation unterschiedlicher Dielektrizitätskonstanten des Füllgutes ist in der EP 0 029 485 A1 vorgesehen. Hierbei wird von dem komplexen Leitwert des Meßkondensators und des Kompensationskondensators jeweils nur der Imaginärteil, nicht aber der Realteil ausgewertet, so daß eine von den Stoffeigenschaften unabhängige kapazitive Füllstandsmessung möglich ist.

Ein konstruktiver Nachteil der bekannten Kompensationsmethoden ist, daß in vielen Anwendungsfällen ein Befestigen der notwendigerweise am Behälterboden anzubringenden Kompensationssonde nicht möglich ist, da dazu der Behälter im unteren Teil angebohrt werden muß, was somit den Einsatz einer solchen Kompensationssonde einschränkt.

Ein weiterer Nachteil der Anordnung der Kompensationssonde am Behälterboden ist, daß Wartungs- und Reparaturmaßnahmen an der Kompensationssonde nur bei vollständig entleertem Behälter möglich sind, was die Betriebssicherheit dieser Kompensationssonde einschränkt.

Der vorliegenden Erfindung liegt die Aufgabe zugrunde, ein Verfahren sowie Vorrichtungen zur kapazitiven Füllstandsmessung zu schaffen, die die vorgenannten Nachteile nicht aufweisen und die eine Kompensation des von der Füllguthöhe und der Dielektrizitätskonstanten des Füllgutes abhängenden Kapazitätswertes der Füllstandsmeßsonde mit einem nur von der Dielektrizitätskonstanten des Füllgutes abhängenden Korrekturwert durchführen.

Diese Aufgabe wird erfindungsgemäß durch die im Anspruch 1 und 2 angegebenen Merkmale gelöst.

Vorteilhafte Ausführungsformen der Erfindung sind in den Unteransprüchen angegeben.

Bei der Erfindung bestehen sowohl die Füllstandsmeßsonde als auch die Kompensationssonde z.B. aus kapazitiven Stab- oder Seilelektroden, wobei die Füllstandsmeßsonde und die Kompensationssonde unterschiedliche Steilheiten besitzen und sich gemeinsam über den gesamten Füllstandsmeßbereich erstrecken. Unter "Steilheit" wird hier die mit der Sonde gemessene Kapazität pro Längeneinheit und Füllgut-DK verstanden. Die Steilheiten von Füllstandmeßsonde und Kompensationssonde müssen dabei in unterschiedlicher Weise vom Füllgut-DK abhängig sein; dies bedeutet, daß mindestens eine der Steilheiten durch eine nichtlineare mathematische Funktion mit dem DK-Wert verknüpft ist.

Wesentlich an der Erfindung ist, daß dadurch, daß sich auch die Kompensationssonde über den gesamten Füllstandsmeßbereich erstreckt, die Korrektur des Meßsondensignals mit einem über den gesamten Füllstandsmeßbereich ermittelten DK-Wert erfolgt und eine Korrektur des von der Füllstandsmeßsonde abgeleiteten Stromwertes mit einem Korrekturwert erfolgt, der nicht nur lokal in einem kleinen Teilvolumen des Behälters bestimmt wird, sondern über die gesamte Füllstandshöhe gemessen wird.

Zur Gewinnung eines DK-kompensierbaren Meßsignals sind die Elektroden der Füllstandsmeßsonde und der Kompensationssonde so angeordnet, daß die Sonden sämtliche das Meßsignal formende Kondensatorflächen aufweisen, so daß die Kapazitäten der Kondensatoren behälterneutral, insbesondere unabhängig von der Behälterwand, Form und Material, gemessen werden. Die Bestimmung des DK-Wertes des Füllgutes erfolgt aus dem Verhältniswert der von der Füllstandsmeßsonde und der Kompensationssonde gemessenen Kapazitätsdifferenz. Dieser Verhältniswert ist unabhängig von der Füllstandshöhe im Behälter und auch unabhängig von den absoluten von der Füllstandshöhe abhängigen Kapazitäten der Füllstandsmeßsonde und der Kompensationssonde. Um dies zu erreichen, weist die Kompensationssonde gegenüber der Füllstandmeßsonde unterschiedliche Steilheit C = f (H, $\epsilon_r$) auf und zwar aufgrund unterschiedlicher Elektrodengeometrien (siehe Anspruch 3) und/ oder unterschiedlicher Elektroden-Dielektrika wie nach Anspruch 4 ausgeführt.

Bei Elektrodeneinsätzen mit DK-steuerbarer Keramik, wie in Anspruch 14 angeführt, können die unterschiedlichen Steilheiten C der Füllstandsmeßsonde und Kompensationssonde durch eine Änderung der Amplitude einer Meßwechselspannung (siehe Anspruch 15) oder durch Zuschalten eines Gleichfeldes (siehe Anspruch 16) eingestellt werden. Bei derartigen Elektrodeneinsätzen ist vorteilhaft nur eine einzige Sonde notwendig, die dann abwechselnd als Füllstandsmeßsonde bzw. Kompensationssonde einsetzbar ist.

Die Sonden werden wie nach Anspruch 7 z.B. als Stabsonden bzw. wie nach Anspruch 12 als Seilsonden gefertigt. Die Anzahl der Elektroden einer Füllstandmeßsonde beträgt mindestens 2.

Zur Bestimmung der Kapazitäten der Füllstands- und Kompensationsmeßsonde werden diese mit einer von einem Oszillator erzeugten Wechselspannung (Oszillatorspannung) beaufschlagt. Die dadurch erzeugten jeweiligen Kondensatorströme werden mittels einer Schaltungsanordnung, wie in den Ansprüchen 17, 18 und 21 vorgeschlagen, vorzugsweise in Gleichspannungswerte umgewandelt, die der jeweiligen Kapazität der Füllstandsmeßsonde bzw. der Kompensationssonde proportional sind. Zur Verringerung des Einflusses leitfähiger Füllgutanhaftungen auf den Kondensatorflächen wird zur Messung eine Wechselspannung mit hoher Frequenz gemäß Anspruch 19 eingesetzt, aus welcher durch Anwendung auch bekannter Gleichrichtverfahren jeweils der Kapazität und damit der Bedeckung der Füllstandsmeßsonde bzw. der Kompensationssonde entsprechende Gleichspannungswerte erzeugt werden. Vorzugsweise ist für die anhaftungsneutrale Messung ein phasenbewertendes, d.h. phasenselektives, Gleichrichtverfahren einzusetzen.

Durch Verwendung eines phasenselektiven Gleichrichtverfahrens (Synchrondemodulation) werden nur Meßwertspannungen mit einer gewünschten Phasenlage zur Oszillatorspannung selektiert. Diese Phasenlage ist mittels eines Phasenschiebers vorteilhaft kontinuierlich, wie in Anspruch 23 angegeben, einstellbar, so daß der Beitrag des Real- bzw. Imaginärteils des komplexen Kondensatorleitwertes zu der phasenselektiv gleichgerichteten Meßwertspannung kontinuierlich einstellbar ist. Mittels dieses Meßverfahrens kann je nach eingestellter Phasenverschiebung zwischen den Steuersignalen und der Oszillatorspannung gemäß Anspruch 22 die gewünschte Meßwechselstromkomponente bzw. Meßwechselspannungskomponente nach einer Strom-Spannungs-Wandlung zur Gleichrichtung gebracht werden. Zur Strom-Spannungs-Wandlung werden vorteilhaft Strom-Spannungs-Wandler, wie mit Anspruch 25 angegeben, verwendet, die eine Eingangsimpedanz von nahezu null Ohm gemäß Anspruch 24 aufweisen, wodurch die kapazitive Koppelung zwischen den Meßsonden unterdrückt wird.

Mittels Analog-Digital-Wandlern werden die Gleichspannungsmeßwerte digitalisiert und einer elektronischen Recheneinheit zugeführt, die diese Meßsignale nach dem Kompensations-Algorithmus zu einem DK-unabhängigen Füllstandswert berechnet (s. auch Anspruch 18).

Durch den symmetrischen Aufbau der beiden Meßkanäle besitzen diese eine identische Steilheit, so daß keine diesbezügliche Anpassung bei der Berechnung des DK-kompensierten Füllstandswertes erforderlich ist.

Der Gegenstand der Erfindung ist nachfolgend anhand von in den Zeichnungen dargestellten bevorzugten Ausführungsformen in schematischer Weise dargestellt. Es zeigen

Figur 1 einen Längsschnitt einer erfindungsgemäßen Elektrodenanordnung, einer Füllstandsmeßsonde und einer Kompensationssonde, die in das in einem Behälter befindliche Füllgut eintauchen, nach einem ersten Ausführungsbeispiel,

Figur 2a Ersatzschaltbild für die Füllstandsmeßsonde,

Figur 2b Ersatzschaltbild für die Kompensationssonde,

Figur 3 exemplarisches Kurvendiagramm der Abhängigkeit des Korrekturfaktors K vom Kapazitätsverhältnis Q,

| Figur 4 | einen Querschnitt durch zwei Hüllrohr-Stabsonden mit Innenelektrode gemäß dem ersten Ausführungsbeispiel, |
| Figur 5 | einen Querschnitt einer Hüllrohr-Stabsonde mit segmentierter Innenelektrode gemäß einem zweiten Ausführungsbeispiel, |
| Figur 6 | einen Querschnitt von vier Stabsonden gemäß einem dritten Ausführungsbeispiel, |
| Figur 7 | einen Querschnitt dreier Stabsonden nach einem vierten Ausführungsbeispiel, |
| Figur 8 | einen Querschnitt einer Stabsonde mit vierfach segmentierten Elektroden gemäß einem fünften Ausführungsbeispiel, |
| Figur 9 | einen Querschnitt zweier Stabsonden mit einer Halbsegmentstabelektrode nach einem sechsten Ausführungsbeispiel, |
| Figur 10 | einen Querschnitt einer Sonde mit drei geradlinig und symmetrisch angeordneten Seilelektroden gemäß einem siebten Ausführungsbeispiel, |
| Figur 11 | einen Querschnitt einer Sonde mit drei geradlinig und asymmetrisch angeordneten Seilelektroden nach einem achten Ausführungsbeispiel, |
| Figur 12 | einen Querschnitt einer Innenseilsonde mit drei Segmentelektroden nach einem neunten Ausführungsbeispiel, |
| Figur 13a | ein Ersatzschaltbild für die Beschaltung einer Elektrodenanordnung mit DK-steuerbarer Keramik durch Änderung der Meßwechselspannungsamplitude, |
| Figur 13b | Ersatzschaltbild für die Beschaltung einer Elektrodenanordnung mit DK-steuerbarer Keramik durch Zuschalten eines Gleichfeldes und |
| Figur 14 | ein Blockdiagramm, das ein Ausführungsbeispiel einer Beschaltung einer erfindungsgemäßen Sondenanordnung darstellt. |

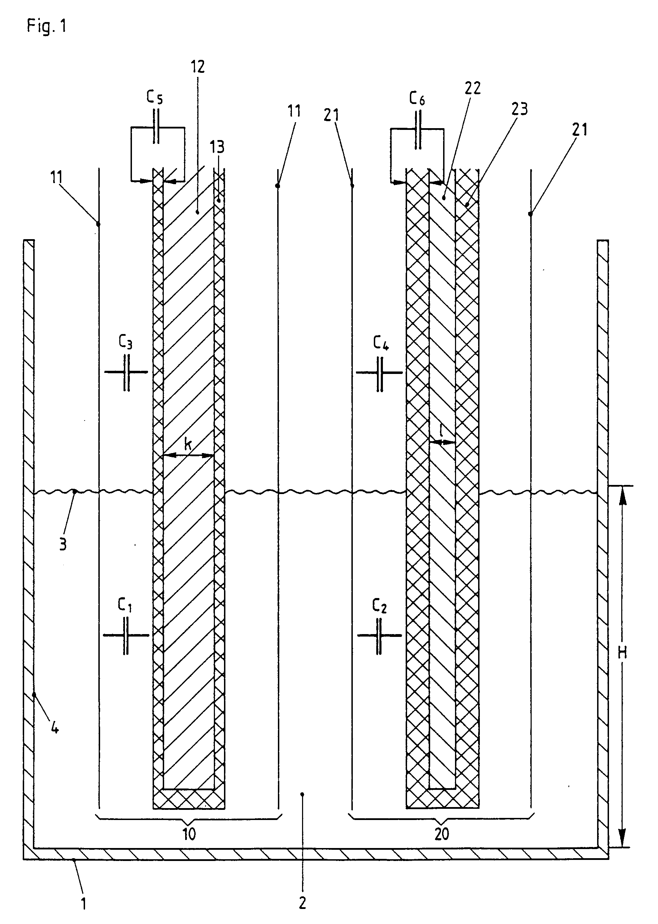

Die in Figur 1 dargestellte Elektrodenanordnung besteht aus einer Füllstandsmeßsonde 10 und einer Kompensationssonde 20, die zueinander parallel und mit ihrer Längsrichtung parallel zur Innenwand 4 eines Behälters in das Füllgut 2, mit der Füllguthöhe H, eintauchen.

Die Füllstandsmeßsonde 10 besteht aus einer Hüllrohrelektrode 11 und einer Innenelektrode 12 mit einem Durchmesser k, die mit einer als Elektrodendielektrikum 13 wirkenden, abriebfesten Schutzschicht, die vorzugsweise aus einem chemisch inerten Kunststoffmaterial besteht, überzogen ist. Die Kompensationssonde 20 besteht aus einer Hüllrohrelektrode 21 und einer mit einem Elektrodendielektrikum 23 überzogenen Innenelektrode 22, die einen Durchmesser 1 aufweist.

Die Füllstandsmeßsonde 10 und die Kompensationssonde 20 besitzen in dem durch das Füllgut benetzten Elektrodenflächenbereich die Kapazitäten C1 bzw. C2. In dem sich außerhalb des Füllgutes erstreckenden Bereich besitzen die Füllstandsmeßsonde 10 und die Kompensationssonde 20 die Kapazitäten C3 und C4. Die unterschiedlich großen Kapazitäten der Elektrodendielektrika 13 und 23 sind mit C5 und C6 bezeichnet. In Figur 1 sind diese Kapazitäten durch Kondensatorsymbole veranschaulicht.

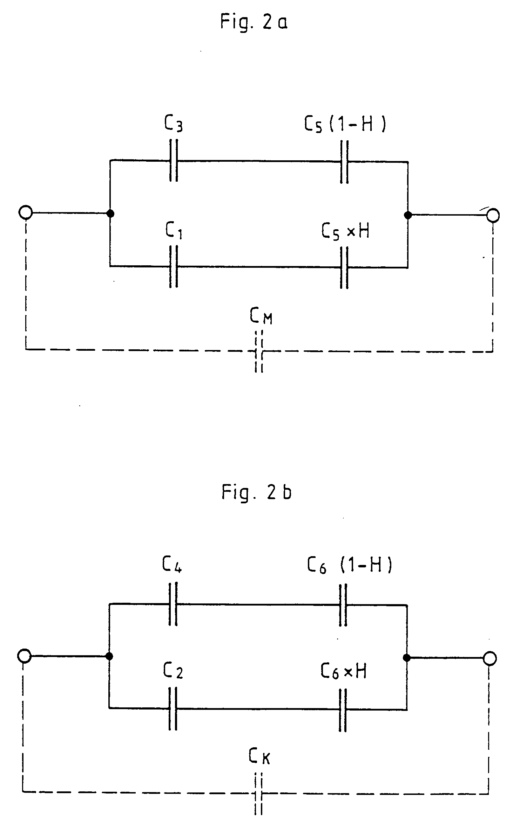

Ein Ersatzschaltbild der in Figur 1 symbolisch eingezeichneten Kapazitäten der Füllstandsmeß- und Kompensationssonde 10, 20 ist in Figur 2a und 2b dargestellt.

Figur 2a zeigt die Kapazitäten der Füllstandsmeßsonde 10. Die zwischen der Hüllrohrelektrode 11 und der Innenelektrode 12 gebildete Kapazität $C_M$ setzt sich aus der Parallelschaltung zweier Serienkapazitäten zusammen: C1 liegt in Serie zur Teilkapazität C5 x H und C3 liegt in Serie zur Teilkapazität C5 x (1 - H).

Die Gesamtkapazität der Füllstandmeßsonde 10 ist in Figur 2a gestrichelt durch eine Ersatzkapazität $C_M$ dargestellt.

Die Gesamtkapazität der Kompensationssonde 20 ist die als Ersatzkapazität gestrichelt dargestellte Größe $C_K$. Sie ist analog der zuvor beschriebenen Meßsonde $C_M$ aufgebaut.

Die Gesamtkapazität $C_M$ der Füllstandsmeßsonde 10 als Funktion des Füllgutdielektrikums und als Funktion der Füllstandsmeßhöhe H ist in Gleichung 1 und die Gesamtkapazität der Kompensationssonde als Funktion des Füllgutdielektrikums und der Füllstandsmeßhöhe H ist in Gleichung 2 angegeben.

$$C_M = \left[ \frac{C_5 \cdot C_{LM} \cdot \varepsilon_r}{C_5 + C_{LM} \cdot \varepsilon_r} - \frac{C_5 \cdot C_{LM}}{C_5 + C_{LM}} \right] \cdot H + \frac{C_5 \cdot C_{LM}}{C_5 + C_{LM}} \qquad (1)$$

$$C_K = \left[ \frac{C_6 \cdot C_{LK} \cdot \varepsilon_r}{C_6 + C_{LK} \cdot \varepsilon_r} - \frac{C_6 \cdot C_{LK}}{C_6 + C_{LK}} \right] \cdot H + \frac{C_6 \cdot C_{LK}}{C_6 + C_{LK}} \qquad (2)$$

$$C_1 = C_{LM} \cdot \varepsilon_r \cdot H$$
$$C_2 = C_{LK} \cdot \varepsilon_r \cdot H$$
$$C_3 = C_{LM} \cdot (1 - H)$$
$$C_4 = C_{LK} \cdot (1 - H)$$

$C_{LM}$ = maximale Luftspaltkapazität der Meßelektrode bei Füllhöhe H = 0
$C_{LK}$ = maximale Luftspaltkapazität der Kompensationselektrode bei Füllhöhe H = 0
H = relative Füllhöhe (0.....1)

Sowohl die Kapazität $C_M$ der Füllstandsmeßsonde 10 als auch die Kapazität $C_K$ der Kompensationssonde 20 sind jeweils erstens vom Dielektrikumswert $\varepsilon_r$ des Füllgutes und zweitens von der Füllguthöhe H einzeln abhängig (s. Gleichung 1 und 2 und Figur 2a, 2b), wohingegen das Verhältnis $Q = \Delta C_M / \Delta C_K$ nur abhängig ist von dem Dielektrikumswert $\varepsilon_r$ des Füllgutes.

Durch Bildung des Verhältnisses Q läßt sich somit der Wert des Füllgut-Dielektrikums füllhöhenneutral bestimmen und in der Folge zur Korrektur des Füllhöhensignals verwenden. Dazu wird eine Korrekturfunktion K = f (Q) ermittelt, die von der Sondengeometrie und dem Sonden-Dielektrikum abhängt.

Sie kann durch wiederholtes Einsetzen unterschiedlicher $\varepsilon_r$-Werte in die Gleichungen (1) und (2) errechnet werden, so daß man ein Kontingent Wertepaare für K und Q erhält, die durch Interpolation zu der approximierten Funktion führen.

Die korrigierte Füllhöhe ergibt sich schließlich durch Multiplikation des gemessenen Wertes der Füllstandsmeßsonde mit dem Korrekturwert K.

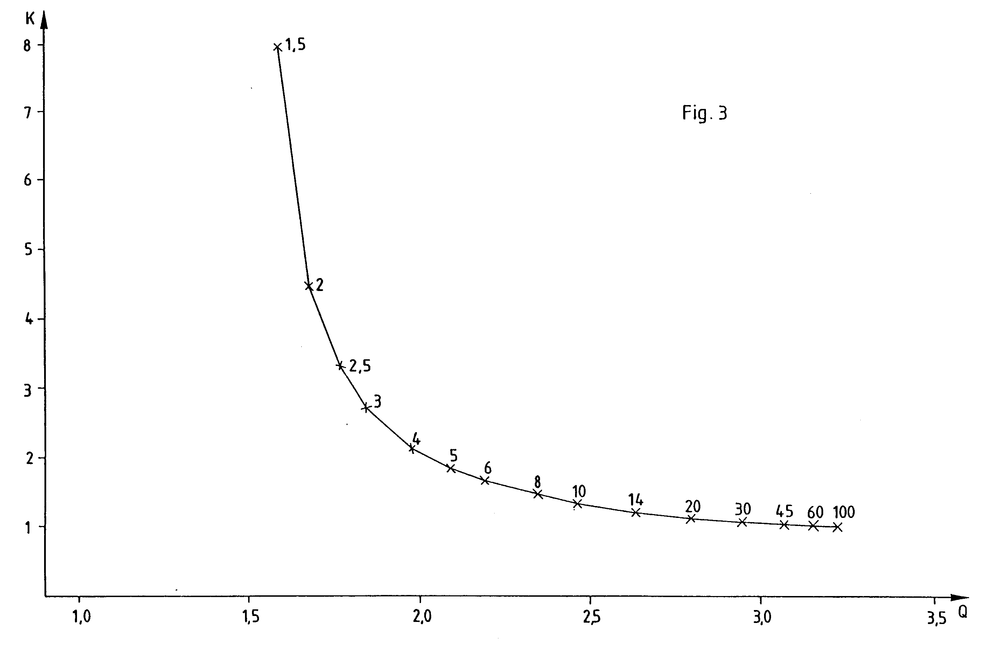

Diese Funktion Q ist in Figur 3 für ein Ausführungsbeispiel dargestellt. Die Zuordnung zwischen dem dem Verhältniswert Q entsprechenden Dielektrikumswert $\varepsilon_r$ des Füllgutes und einem Korrekturwert K ist für alle $\varepsilon_r$ verschieden, so daß für jedem $\varepsilon_r$-Wert ein entsprechender Korrekturwert K zugeordnet werden kann.

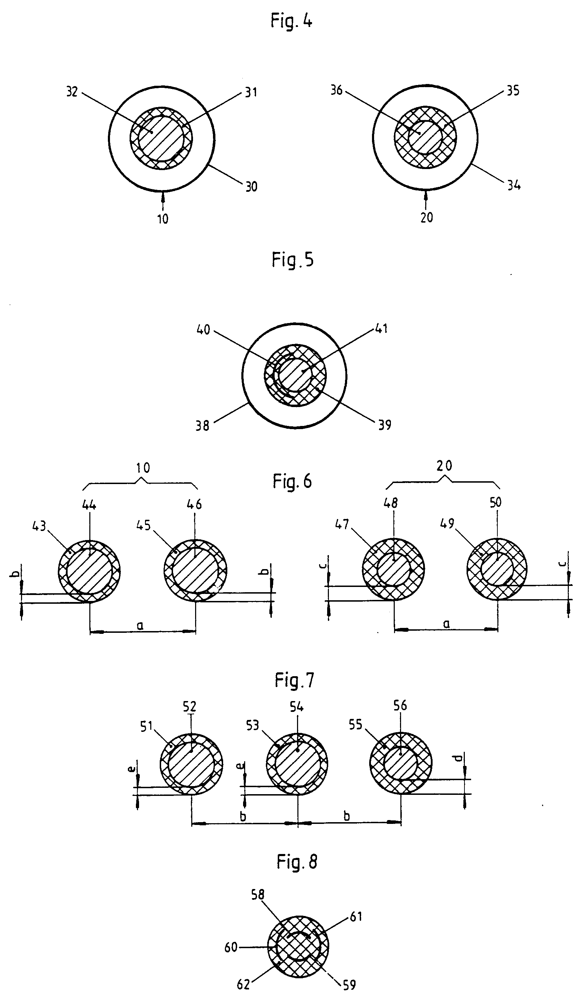

Figur 4 zeigt die Anordnung einer Füllstandsmeßsonde 10 und Kompensationssonde 20, die jeweils aus einer Hüllrohrelektrode 30, 34 und einer in diese Hüllrohrelektrode 30, 34 eingebrachten konzentrisch angeordneten Innenelektrode 32, 36, die mit Elektrodendielektrika 31, 35, die unterschiedliche Dicken aufweisen, überzogen sind, bestehen.

Figur 5 zeigt eine Anordnung mit drei Elektroden, bestehend aus einer Hüllrohrelektrode 38, einer konzentrisch in das Hüllrohr eingesetzten Innenelektrode 41, die mit einem Elektrodendielektrikum 39 ummantelt ist, und einer in das Elektrodendielektrikum 39 eingebetteten halbkreisförmigen Segmentelektrode 40.

Figur 6 zeigt die Anordnung einer Füllstandsmeßsonde 10 und einer Kompensationssonde 20. Die Sonden bestehen aus jeweils zwei Innenstabelektroden 44, 46 bzw. 48, 50, die einen Abstand a voneinander aufweisen und mit Elektrodendielektrika 43, 45, 47 und 49 ummantelt sind. Die unterschiedlichen kapazitiven Steilheiten werden durch unterschiedliche Manteldicken b der Elektrodendielektrika 43, 45 gegenüber den Manteldicken c der Elektrodendielektrika 47, 49 bewirkt.

Figur 7 zeigt eine symmetrische Anordnung aus drei Stabelektroden 52, 54, 56, die jeweils mit einem Elektrodendielektrikum 51, 53 und 55 ummantelt sind. Dabei weist das Elektrodendielektrikum 55 eine größere Manteldicke d gegenüber der Manteldicke e der Elektrodendielektrika 51 und 53 auf. Im kapazitiven Zusammenwirken der Stabelektroden 54 und 56 bzw. 52 und 54 werden eine Füllstandsmeßsonde und eine Kompensationssonde, die unterschiedliche Meßkapazitäten aufweisen, gebildet.

In Figur 8 ist eine in ein Elektrodendielektrikum 62 eingebettete, aus vier Elektroden gebildete Sondenanordnung dargestellt, wobei jeweils zwei kreisförmige Rohrsegmente konzentrisch und diametral zueinander angeordnet sind. Im Zusammenwirken der sich diametral gegenüberliegenden Segmentelektroden 60 und 61 bzw. 58 und 59 werden die zwei Kondensatorflächen einer Füllstandsmeßsonde und der Kompensationssonde gebildet. Bei alternierender Kapazitätsmessung über die Segmentelektrodenpaare 60/61 und 58/59 wird zunächst die Meßkapazität des Segmentelektrodenpaares 60/61 und anschließend die Meßkapazität des Segmentelektrodenpaares 58/59 gemessen. Zur Vermeidung von Meßfehlern durch viskose-anhaftende Füllgüter werden die jeweils nicht messenden Segmente auf ein elektrisches Schirmpotential gelegt, um die in DE 28 19 731 erläuterte Wirkung zu erzielen.

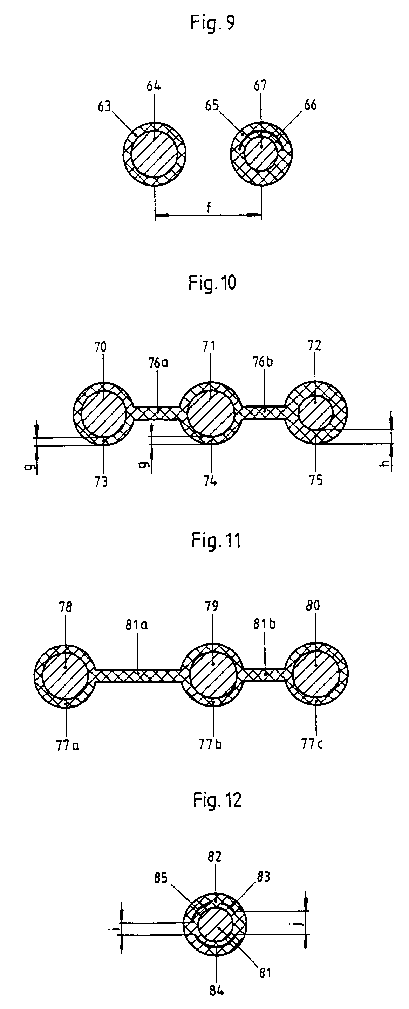

Figur 9 zeigt eine dreipolige Elektrodenanordnung, wobei zwei Elektroden als Stabelektroden 64, 67 ausgeformt sind, die in einem Abstand f zueinander angeordnet sind. Die Stabelektroden 64 und 67 sind mit einem Elektrodendielektrikum 63 und 65 ummantelt. Als dritte Elektrode ist eine halbkreisförmige Segmentelektrode 66 konzentrisch zur Stabelektrode 67 im Elektrodendielektrikum 65 eingebettet. Im kapazitiven Zusammenwirken der Stabelektroden 64 und 67 bzw. 64 und der Segmentelektrode 66 werden eine Füllstandsmeßsonde und eine Kompensationssonde gebildet.

In Figur 10 ist eine dreipolige, symmetrische Elektrodenanordnung dargestellt, die aus drei Seilelektroden 70, 71, 72 besteht, werden jeweils von einem Elektrodendielektrikum 73, 74 und 75 ummantelt sind und wobei die einzelnen Seilelektroden 70, 71, 72 durch zwei Verbindungsstege 76a, 76b, die einstückig mit den Elektrodendielektrika 73 und 74, bzw. 74 und 75 verbunden sind, geradlinig zueinander angeordnet sind. Durch das kapazitive Zusammenwirken der Seilelektroden 70, 71 und 72, 71 sind eine Füllstandsmeßsonde und eine Kompensationssonde gebildet, die aufgrund der unterschiedlichen Manteldicken g und h der Elektrodendielektrika 73, 74 und 75 verschieden große kapazitive Steilheiten aufweisen.

Figur 11 zeigt eine dreipolige Elektrodenanordnung, bestehend aus drei, die jeweils von einem Elektrodendielektrikum 77 a, b, c umgebenen Seilelektroden 78, 79, 80, wobei die Seilelektroden 78, 79 mittels eines mit den Elektrodendielektrika 77a, 77b einstückigen Verbindungssteges 81a und die Seielektroden 79 und 80 mittels eines mit Elektrodendielektrika 77b und 77c einstückigen Verbindungssteges 81b miteinander verbunden sind und zusammen mit der Seilelektrode 78 in einer gemeinsamen Ebene verlaufen. Die Verbindungsstege 81a und 81b weisen unterschiedliche Breiten auf, so daß die Kapazitäten zwischen den Seilelektroden 78 und 79 einerseits und 80 und 79 andererseits unterschiedlich groß sind.

Diese unterschiedlichen kapazitiven Steilheiten zwischen den Seilelektroden 78 und 79 bzw. 80 und 79 werden für die Füllstandsmeßsonde und die Kompensationssonde ausgenützt.

Figur 12 zeigt eine vierpolige, segmentierte Füllstandsmeß-Kompensationssondenanordnung. Diese besteht aus einer Innenseilelektrode 81, die mit einem Dielektrikum 82 ummantelt ist. In dieses Dielektrikum sind drei konzentrisch zur Innenseilelektrode 81 angeordnete Segmentelektroden 83, 84, und 85 eingebracht. Die Segmentelektroden 84 und 85 weisen voneinander einen Segmentabstand i und die Segmentelektroden 83 und 84 einen Segmentabstand j auf, wobei die Segmentabstände i und j verschieden groß sind. Im Zusammenwirken der Segmentelektroden 84 und 85 bzw. 84 und 83 sind eine Füllstandsmeßsonde und eine Kompensationssonde gebildet.

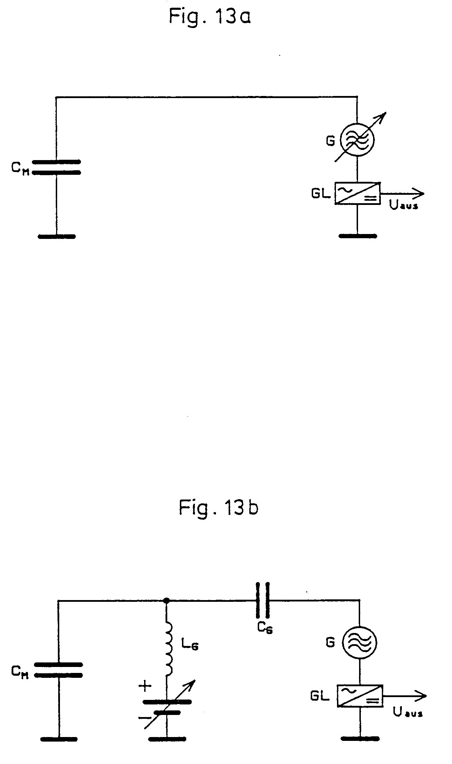

In Figur 13a ist die Beschaltung einer Meßkapazität $C_M$, für einen Elektrodeneinsatz, der Elektroden mit DK-steuerbarer Keramik aufweist, dargestellt. Die Kapazität $C_M$ liegt in Serie zu einem HF-Generator G. Die Änderung der Steilheit C der Meßkapazität $C_M$ wird durch die Änderung der Amplitude der Meßwechselspannung bewirkt. Mittels eines Wechselstromgleichrichters GL wird diese Änderung des Meßwechselstroms in ein Ausgangssignal $U_{aus}$ umgesetzt.

Die Änderung der Steilheit C einer Elektrodenanordnung mit DK-steuerbarer Keramik durch Zuschalten eines Gleichfeldes ist in Figur 13b dargestellt. Dazu wird die Meßkapazität $C_M$ mit einer Gleichspannung beaufschlagt. Die unterschiedlichen Steilheiten für eine Füllstandsmeßsonde und eine Kompensationssonde werden durch unterschiedlich hohe Gleichspannungen bewirkt. Mittels eines HF-Generators G und eines Meßstromgleichrichters Gl wird die Meßkapazität der Füllstandsmeß- bzw. Kompensationssonde ermittelt.

Um die Gleichspannung der Gleichspannungsquelle gegenüber dem Meßstromgleichrichter abzublocken, ist der Kondensator $C_G$ vorgesehen. In gleicher Weise verhindert die Abblockinduktivität $L_G$ einen Kurzschluß der Hochfrequenz über die Gleichspannungsquelle.

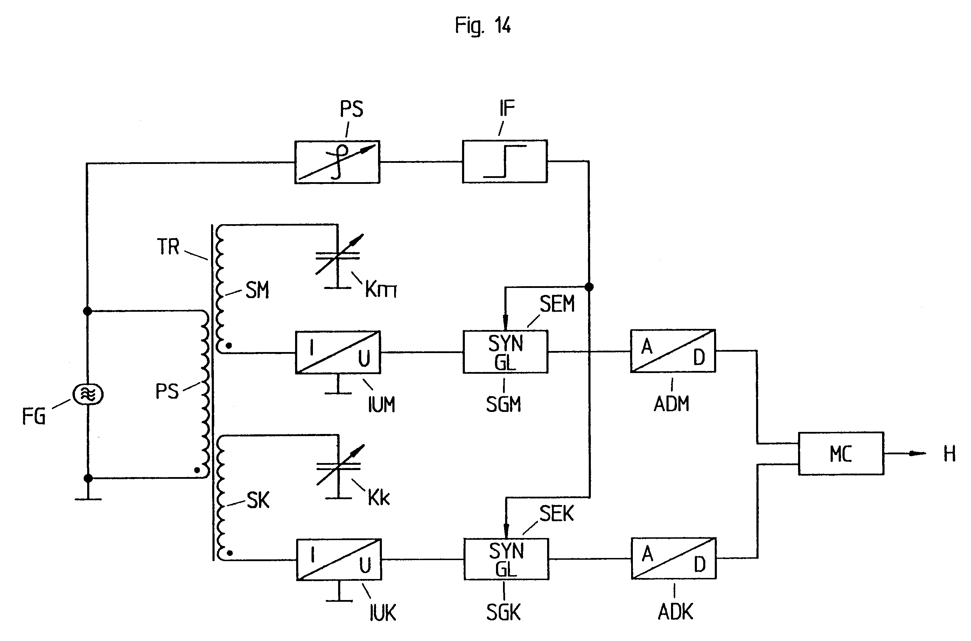

In Figur 14 ist eine Schaltungsanordnung dargestellt, die zur phasenselektiven Kapazitätsmessung einer symbolisch dargestellten Füllstandsmeßsonde mit der Gesamtkapazität $K_M$ und einer symbolisch dargestellten Kompensationsmeßsonde mit der Gesamtkapazität $K_K$ dient. Die Kondensatorflächen der Füllstandsmeßsonde und der Kompensationsmeßsonde werden mittels eines Übertragers TR mit einer von einem Oszillator FG erzeugten Wechselspannung beaufschlagt. Primärseitig besteht der Übertrager TR aus einer Primärspule PS und sekundärseitig aus zwei symmetrisch zur Primärspule PS angeordneten Sekundärspulen SM und SK. Durch die mit Kondensatorflächen der Füllstandsmeß- und Kompensationsmeßsonde jeweils verbundene Sekundärspule SM bzw. SK fließt ein sondenkapazitätsproportionaler Wechselstrom, der jeweils einem Stromspannungswandler IUM bzw. IUK zugeführt wird. Eingangsseitig besitzen die Stromspannungswandler IUM und IUK eine Eingangsimpedanz von nahezu null Ohm. Dies bewirkt, daß die Strom-Spannungs-Wandler keinen Spannungsabfall - und dadurch auch keine Phasenverschiebung - verursachen. Ausgangsseitig sind die Strom-Spannungs-Wandler mit dem Eingang jeweils eines Gleichrichters, vorzugsweise eines phasenselektiven Gleichrichters SGM bzw. SGK, verbunden. Die Gleichrichter SGM und SGK besitzen jeweils einen Steuereingang SEM bzw. SEK, über den vom Oszillator FG erzeugte Steuerpulse zugeführt werden. Mittels eines Phasenschiebers PS werden diese Steuerpulse in ihrer Phasenlage zu der Phasenlage der Meßströme bzw. Meßspannungen eingestellt und mittels eines Impulsformers IF vorzugsweise in Rechteckimpulse umgeformt und dann den Steuereingängen SEM und SEK zugeführt.

Die am Ausgang der Gleichrichter SEM und SEK anliegenden Gleichspannungen werden jeweils mittels eines Analog-Digital-Wandlers ADM bzw. ADK digitalisiert und gemeinsam einer elektronischen Recheneinheit MC zugeführt. In der Recheneinheit MC werden die beiden Meßsignale gemäß dem DK-Kompensationsverfahren zu einem DK-unabhängigen Füllstandswert H miteinander verrechnet.

**Patentansprüche**

1. Verfahren für die Dielektrizitätskonstante (DK)-kompensierte kapazitive Füllstandsmessung mit einer Sondenanordnung, die einen Kondensator zur Füllstandmessung und einen Kondensator zur DK-Kompensation aufweist, die unterschiedliche kapazitive Steilheiten besitzen und sich gemeinsam über einen gleichen Füllstandshöhenmeßbereich erstrecken, mit den Merkmalen, daß aus dem Meßwert der Füllstandsmeßsonde und dem Meßwert der Kompensationssonde ein Verhältniswert Q gebildet wird, der allein von der Dielektrizitätskonstanten $\epsilon_r$ des die Meß- und Kompensationssonde benetzenden Füllguts abhängt, und daß die Füllstandshöhe H des Füllguts aus dem Meßwert der Füllstandsmeßsonde gebildet wird, wobei der Meßwert mit einem Korrekturwert K elektronisch korrigiert wird, der von der Geometrie und dem Dielektrikum der Füllstandsmeßsonde und dem Verhältniswert Q abhängt.

2. Sondenanordnung zur Durchführung des Verfahrens nach Anspruch 1, dadurch gekennzeichnet, daß sich die Kondensatorflächen der Füllstandsmeßsonde und der Kompensationssonde gemeinsam über einen gleichen Füllstandshöhenmeßbereich erstrecken, wobei die Füllstandsmeßsonde und die Kompensationssonde im wesentlichen zueinander parallel angeordnet sind und wobei die Füllstandsmeßsonde und die Kompensationssonde unterschiedliche kapazitive Steilheiten besitzen.

3. Sondenanordnung nach Anspruch 2, dadurch gekennzeichnet, daß sich die kapazitiven Steilheiten der Füllstandsmeßsonde und der Kompensationssonde durch ihre unterschiedlichen Elektrodengeometrien unterscheiden.

4. Sondenanordnung nach Anspruch 2, dadurch gekennzeichnet, daß sich die kapazitiven Steilheiten der Füllstandsmeßsonde und der Kompensationssonde durch ihre unterschiedlichen Elektrodendielektrika unterscheiden.

5. Sondenanordnung nach einem der Ansprüche 2 bis 4, dadurch gekennzeichnet, daß die Füllstandsmeßsonde (10) und die Kompensationssonde (20) aus einer stabförmigen Innenelektrode (32, 36) und einer Hüllrohrelektrode (30, 34) und einem Elektrodendielektrikum (31, 35) besteht.

6. Sondenanordnung nach einem der Ansprüche 2 bis 5, dadurch gekennzeichnet, daß die Füllstandsmeßsonde und/oder die Kompensationssonde jeweils mindestens eine Segmentelektrode (40, 58, 59, 60, 61, 66, 83, 84, 85) aufweisen.

7. Sondenanordnung nach einem der Ansprüche 2 bis 4, dadurch gekennzeichnet, daß die Elektroden der Füllstandsmeßsonde und die Elektroden der Kompensationssonde aus jeweils mindestens zwei Stabelektroden (44, 46; 48, 50; 52, 54, 56, 64, 67) bestehen.

8. Sondenanordnung nach einem der Ansprüche 2 bis 4, dadurch gekennzeichnet, daß die Elektroden aus einem metallischen elektrischen Leiter bestehen.

9. Sondenanordnung nach einem der Ansprüche 2 bis 8, dadurch gekennzeichnet, daß die Gesamtzahl der Elektroden der Füllstandsmeßsonde und der Kompensationssonde mindestens 2 beträgt.

10. Sondenanordnung nach einem der Ansprüche 2 bis 9, dadurch gekennzeichnet, daß das Elektrodendielektrikum der Füllstandsmeßsonde (31, 43, 45, 51, 53, 73, 74) und der Kompensationssonde (35, 47, 49, 55, 75) unterschiedlich große Manteldicken aufweisen.

11. Sondenanordnung nach einem der Ansprüche 2 bis 10, dadurch gekennzeichnet, daß die Abstände (81a) der Elektroden der Füllstandsmeßsonde und die Abstände (81b) der Elektroden der Kompensationssonde unterschiedlich groß sind.

12. Sondenanordnung nach einem der Ansprüche 2 bis 4, dadurch gekennzeichnet, daß die Elektroden Seilelektroden (70, 71, 72, 78, 79, 80, 81) sind.

13. Sondenanordnung nach einem der Ansprüche 2 bis 12, dadurch gekennzeichnet, daß mindestens eine der Elektroden mit einer abriebfesten und chemisch inerten Schutzschicht überzogen ist.

14. Sondenanordnung nach einem der Ansprüche 2 bis 13, dadurch gekennzeichnet, daß die Elektroden der Füllstandsmeßsonde bzw. Kompensationssonde ein DK-steuerbares Dielektrikum, z. B. eine DK-steuerbare Keramik, aufweisen.

15. Sondenanordnung nach einem der Ansprüche 2 bis 14, dadurch gekennzeichnet, daß der DK-Wert der Elektrodenisolation durch die Amplitude einer Meßwechselspannung veränderbar ist.

16. Sondenanordnung nach einem der Ansprüche 2 bis 14, dadurch gekennzeichnet, daß der DK-Wert der Elektrodenisolation durch ein zugeschaltetes Gleichfeld veränderbar ist.

17. Verfahren nach Anspruch 1, dadurch gekennzeichnet, daß aus den komplexen Leitwerten der Füllstandsmeß- bzw. Kompensationssonde dem Bedeckungsgrad der Füllstandsmeß- bzw. Kompensationssonde proportionale Meßwerte, vorzugsweise Spannungswerte, gebildet werden, wobei die relativen Beiträge des Real- und Imaginärteils zum Meßwert mittels eines phasenselektiven Gleichrichteverfahrens ermittelt werden.

18. Verfahren nach Anspruch 17, dadurch gekennzeichnet, daß die Füllstandsmeßsonde und die Kompensationssonde mit einer von einem Oszillator (FG) erzeugten Wechselspannung beaufschlagt werden, wobei die erzeugten Meßwechselströme proportional zum Bedeckungsgrad der Füllstandsmeßsonde bzw. der Kompensationssonde sind und jeweils mittels eines Strom-Spannungs-Wandlers (IUM, IUK) in den dem Bedeckungsgrad proportionale Meßwechselspannungen umgewandelt werden, die mittels phasenselektiver Gleichrichter (SGM bzw. SGK) gleichgerichtet werden, welche gemeinsam von einem in seiner Phase gegenüber der Oszillatorspannung verschobenen und zu einem Rechteckimpuls geformten Signal angesteuert werden, um derartig die Meßwechselspannungen in eine den Bedeckungsgrad der Füllstandsmeßsonde und der Kompensationssonde proportionale Gleichspannung umzuwandeln, die mittels Analog-Digital-Wandlern (ADM, ADK) digitalisiert werden und wobei die digitalisierten Meßwerte einer elektronischen Recheneinheit (MC) zur Berechnung eines DK-unabhängigen Füllstandswertes zugeführt werden.

19. Verfahren nach Anspruch 18, dadurch gekennzeichnet, daß der Oszillator (FG) eine hochfrequente Wechselspannung erzeugt.

20. Verfahren nach Anspruch 18, dadurch gekennzeichnet, daß die von dem Oszillator (FG) erzeugte Wechselspannung mittels eines Übertragers (TR), der eine Primärspule (PS) und zwei die gleiche Windungsanzahl aufweisende Sekundärspulen (SM, SK) aufweist, der Füllstandsmeßsonde und der Kompensationssonde zugeführt wird.

21. Sondenanordnung nach einem der Ansprüche 2 bis 16, gekennzeichnet durch Mittel zur Bildung von dem Bedeckungsgrad der Füllstandsmeßsonde und der Kompensationssonde proportionalen Meßwerten, wobei die Mittel mindestens einen Oszillator (FG), einen Übertrager (TR), zwei Strom-Spannungs-Wandler (IUM, IUK), zwei phasenselektive Gleichrichter (SGM, SGK) umfassen und wobei der Übertrager (TR) primärseitig eine mit dem Oszillator (FG) verbundene Spule (PS) und sekundärseitig zwei jeweils einerends mit einer Kondensatorfläche der Füllstandsmeß- bzw. der Kompensationssonde verbundene Spulen (SM, SK) aufweist, und welche anderenends mit den Eingängen zweier Strom-Spannungs- Wandler (IUM, IUK) verbunden sind, wobei die Ausgänge der Strom-Spannungs-Wandler (IUM, IUK) jeweils mit den Eingängen eines phasenselektiven Gleichrichters (SGM, SGK), die jeweils einen Steuereingang besitzen, verbunden sind, so daß an deren Ausgängen eine dem Bedeckungsgrad der Füllstandsmeßsonde bzw. Kompensationssonde proportionale Gleichspannung abgreifbar ist.

22. Sondenanordnung nach Anspruch 21, dadurch gekennzeichnet, daß die Steuereingänge der Gleichrichter (SGM, SGK) gemeinsam mit dem Ausgang eines Impulsformers (IF) verbunden sind, der eingangsseitig mit dem Ausgang eines Phasenschiebers (PS) verbunden ist, welcher eingangsseitig mit dem Oszillator (FG) und der Spule (PS) verbunden ist.

23. Sondenanordnung nach Anspruch 22, dadurch gekennzeichnet, daß der Phasenschieber (PS) kontinuierlich einstellbar ist, wodurch die Phasenlage zwischen den Eingangssignalen der Gleichrichter (IUM, IUK) und den Steuersignalen kontinuierlich einstellbar ist.

24. Sondenanordnung nach Anspruch 22, dadurch gekennzeichnet, daß die Eingangsimpedanz der Strom-Spannungs-Wandler (IUM, IUK) nahezu null Ohm beträgt.

25. Sondenanordnung nach Anspruch 21, dadurch gekennzeichnet, daß die Ausgänge der Gleichrichter (SGM, SGK) mit den Eingängen jeweils eines Analog-Digital-Wandlers (ADM, ADK) verbunden sind und daß die derartig digitalisierten Gleichspannungen einer elektronischen Recheneinheit (MC), vorzugsweise einem Mikroprozessor, zur weiteren Verarbeitung zuführbar sind.

**Claims**

1. Method for permittivity-compensated (P-compensated) capacitive filling-level measurement using a probe arrangement which comprises a capacitor for the filling-level measurement and a capacitor for the P-compensation, which capacitors have different capacitive slopes and jointly extend over an equal filling-level height measurement range, with the features that there is derived from the measured value of the filling-level measuring probe and the measured value of the compensating probe a ratio value Q which depends solely on the permittivities $\epsilon_r$ of the filling, which wets the measuring probe and the compensating probe, and that the filling-level height H of the charge is derived from the measured value of the filling-level measuring probe, the measured value being electronically corrected using a correction value K which depends on the geometry and the dielectric of the filling-level measuring probe and the ratio value Q.

2. Probe arrangement for carrying out the method according to Claim 1, characterized in that the capacitor areas of the filling-level measuring probe and of the compensating probe extend jointly over an equal filling-level height measurement range, the filling-level measuring probe and the compensating probe being disposed essentially in parallel with one another and the filling-level measuring probe and the compensating probe having different capacitive slopes.

3. Probe arrangement according to Claim 2, characterized in that the capacitive slopes of the filling-level measuring probe and of the compensating probe differ as a result of their different electrode geometries.

4. Probe arrangement according to Claim 2, characterized in that the capacitive slopes of the filling-level measuring probe and of the compensating probe differ as a result of their different electrode dielectrics.

5. Probe arrangement according to one of Claims 2 to 4, characterized in that the filling-level measuring probe (10) and the compensating probe (20) comprises [sic] a rod-like internal electrode (32, 36) and an encasing tubular electrode (30, 34) and an electrode dielectric (31, 35).

6. Probe arrangement according to one of Claims 2 to 5, characterized in that the filling-level measuring probe and/or the compensating probe each have at least one segment electrode (40, 58, 59, 50, 61, 66, 83, 84, 85).

7. Probe arrangement according to one of Claims 2 to 4, characterized in that the electrodes of the filling-level measuring probe and the electrodes of the compensating probe each comprise at least two rod electrodes (44, 46; 48, 50; 52, 54, 56, 64, 67).

8. Probe arrangement according to one of Claims 2 to 4, characterized in that the electrodes comprise a metallic electrical conductor.

9. Probe arrangement according to one of Claims 2 to 8, characterized in that the total number of electrodes of the filling-level measuring probe and of the compensating probe is at least 2.

10. Probe arrangement according to one of Claims 2 to 9, characterized in that the electrode dielectric of the filling-level measuring probe (31, 43, 45, 51, 53, 73, 74) and of the compensating probe (35, 47, 49, 55, 75) have sheathing thicknesses of different size.

11. Probe arrangement according to one of Claims 2 to 10, characterized in that the spacings (81a) of the electrodes of the filling-level measuring probe and the spacings (81b) of the electrodes of the compensating probe are of different size.

12. Probe arrangement according to one of Claims 2 to 4, characterized in that the electrodes are stranded electrodes (70, 71, 72, 78, 79, 80, 81).

13. Probe arrangement according to one of Claims 2 to 12, characterized in that at least one of the electrodes is coated with an abrasion-resistant and chemically inert protective layer.

14. Probe arrangement according to one of Claims 2 to 13, characterized in that the electrodes of the filling-level measuring probe or compensating probe have a P-controllable dielectric, for example a P-controllable ceramic.

15. Probe arrangement according to one of Claims 2 to 14, characterized in that the P-value of the electrode insulation can be varied by means of the amplitude of a measuring alternating voltage.

16. Probe arrangement according to one of Claims 2 to 14, characterized in that the P-value of the electrode insulation can be varied by means of an applied direct field.

17. Method according to Claim 1, characterized in that measured values, preferably voltage values, which are proportional to the degree of coverage of the filling-level measuring probe or compensating probe are derived from the admittances of the filling-level measuring probe or compensating probe, respectively, the relative contributions of the real part and imaginary part to the measured value being determined by means of a phase-selective rectification method.

18. Method according to Claim 17, characterized in that an alternating voltage generated by an oscillator (FG) is applied to the filling-level measuring probe and the compensating probe, the alternating measuring currents generated being proportional to the degree of coverage of the filling-level measuring probe or the compensating probe, respectively, and each being converted by means of a current/voltage converter (IUM, IUK) into the alternating measuring voltages which are proportional to the degree of coverage and which are rectified by means of phase-selective rectifiers (SGM and SGK, respectively) which are jointly driven by a signal which is shifted in its phase with respect to the oscillator voltage and is shaped to produce a square-wave pulse in order thus to convert the alternating measuring voltages into a direct voltage which is proportional to the degree of coverage of the filling-level measuring probe and the compensating probe and which are [sic] digitized by means of analog/digital converters (ADM, ADK), the digitized measured values being fed to an electronic arithmetic unit (MC) for the purpose of calculating a P-independent filling-level value.

19. Method according to Claim 18, characterized in that the oscillator (FG) generates a high-frequency alternating voltage.

20. Method according to Claim 18, characterized in that the alternating voltage generated by the oscillator (FG) is fed to the filling-level measuring probe and the compensating probe by means of a transformer (TR) which has a primary coil (PS) and two secondary coils (SM, SK) having the same number of turns.

**21.** Probe arrangement according to one of Claims 2 to 16, characterized by means for the derivation of measured values which are proportional to the degree of coverage of the filling-level measuring probe and of the compensating probe, the means comprising at least one oscillator (FG), one transformer (TR), two current/voltage converters (IUM, IUK), two phase-selective rectifiers (SGM, SGK) and the transformer (TR) having, on the primary side, a coil (PS) connected to the oscillator (FG) and, on the secondary side, two coils (SM, SK) which are each connected at one end to a capacitor area of the filling-level measuring probe or of the compensating probe, respectively, and which are connected at the other end to the inputs of two current/voltage converters (IUM, IUK), the outputs of the current/voltage converters (IUM, IUK) each being connected to the inputs of a phase-selective rectifier (SGM, SGK) which rectifiers each have a control input, so that a direct voltage proportional to the degree of coverage of the filling-level measuring probe or compensating probe, respectively, can be tapped off at their outputs.

**22.** Probe arrangement according to Claim 21, characterized in that the control inputs of the rectifiers (SGM, SGK) are jointly connected to the output of a pulse shaper (IF) whose input side is connected to the output of a phase shifter (PS) whose input side is connected to the oscillator (FG) and the coil (PS).

**23.** Probe arrangement according to Claim 22, characterized in that the phase shifter (PS) is continuously adjustable, as a result of which the phase relation between the input signals of the rectifiers (IUM, IUK) and the control signals is continuously adjustable.

**24.** Probe arrangement according to Claim 22, characterized in that the input impedance of the current/voltage converters (IUM, IUK) is virtually zero ohm.

**25.** Probe arrangement according to Claim 21, characterized in that the outputs of the rectifiers (SGM, SGK) are connected to the inputs of a respective analog/digital converter (ADM, ADK) and in that the direct voltages digitized thus can be fed to an electronic arithmetic unit (MC), preferably to a microprocessor, for the purpose of further processing.

**Revendications**

**1.** Procédé pour la mesure capacitive de remplissage compensée en fonction de la constante diélectrique (DK), avec un système de sondes qui présente un condensateur pour la mesure de remplissage et un condensateur pour la compensation de la constante diélectrique, condensateurs qui possèdent des pentes capacitives différentes et s'étendent ensemble sur une même zone de mesure de la hauteur de remplissage, procédé caractérisé en ce qu'à partir de la valeur de mesure de la sonde de mesure de remplissage et de la valeur de mesure de la sonde de compensation on forme un rapport Q qui dépend uniquement des constantes diélectriques $\epsilon_r$ du produit de remplissage dans lequel baigne la sonde de mesure de remplissage et la sonde de compensation, et en ce que la hauteur de remplissage H du produit de remplissage est formée à partir de la valeur de mesure de la sonde de mesure de remplissage, la valeur de mesure étant corrigée électroniquement avec un coefficient de correction K qui dépend de la géométrie et du diélectrique de la sonde de mesure de remplissage et de la valeur du rapport Q.

**2.** Système de sondes pour la mise en oeuvre du procédé selon la revendication 1, caractérisé en ce que les surfaces de condensateur de la sonde de mesure de remplissage et de la sonde de compensation s'étendent ensemble sur une zone de mesure identique de la hauteur du remplissage, la sonde de mesure de remplissage et la sonde de compensation étant disposées sensiblement en parallèle l'une par rapport à l'autre, et la sonde de mesure de remplissage et la sonde de compensation possédant des pentes capacitives différentes.

**3.** Système de sondes selon la revendication 2, caractérisé en ce que les pentes capacitives de la sonde de mesure de remplissage et de la sonde de compensation sont différentes en fonction des géométries différentes de leurs électrodes.

4.  Système de sondes selon la revendication 2, caractérisé en ce que les pentes capacitives de la sonde de mesure de remplissage et de la sonde de compensation sont différentes en fonction des diélectriques différents de leurs électrodes.

5.  Système de sondes selon l'une des revendications 2 à 4, caractérisé en ce que la sonde de mesure de remplissage (10) et la sonde de compensation (20) consistent en une électrode intérieure (32, 36) en forme de baguette, en une électrode (30, 34) en forme de tube creux, et en un diélectrique d'électrode (31, 35).

6.  Système de sondes selon l'une des revendications 2 à 5, caractérisé en ce que la sonde de mesure de remplissage et/ou la sonde de compensation présentent respectivement au moins une électrode à segments (40, 58, 59, 60, 61, 66, 83, 84, 85).

7.  Système de sondes selon l'une des revendications 2 à 4, caractérisé en ce que les électrodes de la sonde de mesure de remplissage et les électrodes de la sonde de compensation se composent au moins respectivement de deux électrodes en baguettes (44, 46 ; 48, 50 ; 52, 54, 56, 64, 67).

8.  Système de sondes selon l'une des revendications 2 à 4, caractérisé en ce que les électrodes se composent d'un conducteur électrique métallique.

9.  Système de sondes selon l'une des revendications 2 à 8, caractérisé en ce que le nombre total des électrodes de la sonde de mesure de remplissage et de la sonde de compensation est d'au moins deux.

10. Système de sondes selon l'une des revendications 2 à 9, caractérisé en ce que les diélectriques d'électrode de la sonde de mesure de remplissage (31, 43, 45, 51, 53, 73, 74) et de la sonde de compensation (35, 47, 49, 55, 75) présentent des épaisseurs d'enveloppement de grandeurs différentes.

11. Système de sondes selon l'une des revendications 2 à 10, caractérisé en ce que les distances (81a) des électrodes de la sonde de mesure de remplissage et les distances (81b) des électrodes de la sonde de compensation, sont de grandeurs différentes.

12. Système de sondes selon l'une des revendications 2 à 4, caractérisé en ce que les électrodes sont des électrodes en fil (70, 71, 72, 78, 79, 80, 81).

13. Système de sondes selon l'une des revendications 2 à 12, caractérisé en ce qu'au moins l'une des électrodes est revêtue d'une couche de protection résistant à l'abrasion et chimiquement inerte.

14. Système de sondes selon l'une des revendications 2 à 13, caractérisé en ce que les électrodes de la sonde de mesure de remplissage ou de la sonde de compensation présentent un diélectrique réglable quant à la constante diélectrique DK, par exemple une céramique réglable quant à la constante diélectrique DK.

15. Système de sondes selon l'une des revendications 2 à 14, caractérisé en ce que la valeur de la constante diélectrique DK de l'isolation de l'électrode peut être modifiée par l'amplitude d'une tension alternative de mesure.

16. Système de sondes selon l'une des revendications 2 à 14, caractérisé en ce que la valeur de la constante diélectrique peut être modifiée par le branchement d'un champ continu.

17. Procédé selon la revendication 1, caractérisé en ce que l'on forme, à partir des conductances complexes de la sonde de mesure de remplissage et de la sonde de compensation, des valeurs de mesure proportionnelles au degré de recouvrement de la sonde de mesure de remplissage ou de la sonde de compensation, de préférence des valeurs de tension, en déterminant les contributions relatives de la partie réelle et de la partie imaginaire à la valeur de mesure, au moyen d'un processus de redressement sélectif en phases.

**18.** Procédé selon la revendication 17, caractérisé en ce que la sonde de mesure de remplissage et la sonde de compensation sont sollicitées par une tension alternative produite par un oscillateur (FG), les courants alternatifs de mesure produits étant proportionnels au degré de recouvrement de la sonde de mesure de remplissage ou de la sonde de compensation et étant respectivement convertis, au moyen d'un transformateur de tension (IUM, IUK), en tensions alternatives de mesure proportionnelles au degré de recouvrement, tensions qui sont redressées au moyen de redresseurs sélectifs en phases (SGM ou SGK), redresseurs qui sont commandés ensemble par un signal dont la phase est décalée par rapport à la tension de l'oscillateur et qui est transformé en une impulsion rectangulaire, pour convertir de la sorte les tensions alternatives de mesure en une tension continue proportionnelle au degré de recouvrement de la sonde de mesure de remplissage et de la sonde de compensation, tension continue qui est numérisée au moyen d'un convertisseur analogique-numérique (ADM, ADK), tandis que les valeurs de mesure numérisées sont amenées à une unité électronique de calcul (MC) pour effectuer le calcul d'une valeur de remplissage qui soit indépendante de la constante diélectrique DK.

**19.** Procédé selon la revendication 18, caractérisé en ce que l'oscillateur (FG) produit une tension alternative à haute fréquence.

**20.** Procédé selon la revendication 18, caractérisé en ce que la tension alternative produite par l'oscillateur (FG) est envoyée, au moyen d'un transformateur (TR) qui présente une bobine primaire (PS) et deux bobines secondaires (SM, SK) ayant le même nombre de spires, à la sonde de mesure de remplissage et à la sonde de compensation.

**21.** Système de sondes selon l'une des revendications 2 à 16, caractérisé par des moyens pour former des valeurs de mesure proportionnelles au degré de recouvrement de la sonde de mesure de remplissage et de la sonde de compensation, système dans lequel les moyens comprennent au moins un oscillateur (FG), un transformateur (TR), deux transformateurs de tension (IUM, IUK), deux redresseurs (SGM, SGK) sélectifs en phases, et dans lequel le transformateur (TR) présente du côté primaire une bobine (PS) reliée à l'oscillateur (FG) et du côté secondaire deux bobines (SM, SK) reliées respectivement, d'une part à une surface de condensateur de la sonde de mesure de remplissage ou de la sonde de compensation, et d'autre part aux entrées de deux transformateurs de tension (IUM, IUK), les sorties des transformateurs de tension (IUM, IUK) étant reliées respectivement aux entrées d'un redresseur (SGM, SGK) sélectif en phases, de telle sorte que sur ses sorties on puisse prélever une tension continue proportionnelle au degré de recouvrement de la sonde de mesure de remplissage ou de la sonde de compensation.

**22.** Système de sondes selon la revendication 21, caractérisé en ce que les entrées de commande des redresseurs (SGM, SGK) sont reliées ensemble à la sortie d'un circuit de formation d'impulsions (IF) qui, du côté de l'entrée, est relié à la sortie d'un déphaseur (PS), lequel, du côté de l'entrée, est relié à l'oscillateur (FG) et à la bobine (PS).

**23.** Système de sondes selon la revendication 22, caractérisé en ce que le déphaseur (PS) peut être réglé en continu, grâce à quoi on peut régler en continu la relation de phase entre les signaux d'entrée des redresseurs (IUM, IUK) et les signaux de commande.

**24.** Système de sondes selon la revendication 22, caractérisé en ce que l'impédance d'entrée des transformateurs de tension (IUM, IUK) est presque de zéro Ohm.

**25.** Système de sondes selon la revendication 1, caractérisé en ce que les sorties des redresseurs (SGM, SGK) sont reliées respectivement aux entrées d'un convertisseur analogique-numérique (ADM, ADK), et en ce que les tensions continues, numérisées de la sorte, peuvent être amenées à une unité électronique de calcul (MC), de préférence à un microprocesseur, pour un autre retraitement.

Fig. 1

Fig. 2 a

Fig. 2 b

Fig. 3

Fig. 4

Fig. 5

Fig. 6

Fig. 7

Fig. 8

Fig. 9

Fig. 10

Fig. 11

Fig. 12

EP 0 470 483 B1

Fig. 13a

Fig. 13b

19

Fig. 14

EP 0 470 483 B1